# EUROPÄISCHE PATENTSCHRIFT

(11) **EP 3 168 468 B1**
(45) Veröffentlichungstag und Bekanntmachung des Hinweises auf die Patenterteilung: **04.07.2018**
(21) Anmeldenummer: 16197212.0
(22) Anmeldetag: 04.11.2016
(51) Int. Cl.: F03G 7/06

(54) **RÜCKBLICKELEMENT-KLAPPVORRICHTUNG**
REAR VIEW ELEMENT FOLDING DEVICE
DISPOSITIF REPLIABLE POUR ÉLÉMENT RÉTROVISEUR

(30) Priorität: 12.11.2015 DE 202015106118 U
(43) Veröffentlichungstag der Anmeldung: 17.05.2017
(60) Teilanmeldung: 17200543.1
(73) Patentinhaber: SMR Patents S.à.r.l., 2453 Luxembourg (LU)
(72) Erfinder: Czechowicz, Alexander, 44789 Bochum (DE); Wieczorek, Romeo, 73732 Esslingen (DE); Hein, Peter, 73770 Denkendorf (DE); Herrmann, Andreas, 71364 Winnenden-Baach (DE)
(74) Vertreter: Weber-Bruls, Dorothée

(56) Entgegenhaltungen:
- EP-A1- 0 405 773
- EP-B1- 2 439 106
- JP-A- H07 291 032
- US-A- 4 728 181

## Beschreibung

Die vorliegende Erfindung betrifft eine Rückblickelement-Klappvorrichtung für ein Kraftfahrzeug zum Anfahren zumindest einer Drehstellung eines Elementgehäuses relativ zu einem an das Kraftfahrzeug montierbaren Elementfuß und zum Ver- oder Entriegeln zumindest einer Ruhestellung des Elementgehäuses relativ zum Elementfuß nach dem Oberbegriff von Anspruch 1. Ferner betrifft sie ein Verfahren zum Ansteuern solch einer Rückblickelement-Klappvorrichtung.

Die EP 0 405 773 A1 entspricht dem Oberbegriff des Anspruchs 1 und beschreibt einen Außenspiegel für ein Kraftfahrzeug mit einem Spiegelgehäuse, das an einem zylindrischen Vorsprung befestigt ist, der schwenkbar an einer Basis angebracht ist. Eine Kupplung, die das Gehäuse in einer vorbestimmten Ausrichtung relativ zur Basis sichert, umfasst ein erstes Element, das eine Arretierungsformation trägt, ein zweites Element, das relativ zum ersten Element axial beweglich ist, um die Arretierungsformation in Eingriff mit einer komplementären Formation auf dem zweiten Element zu bringen, und eine Feder, die eine relative axiale Bewegung zwischen dem ersten Element und dem zweiten Element bewirken soll, um die Arretierungsformation in Eingriff mit der komplementären Formation zu bringen. Die Kupplung kann durch Erhitzen eines Formgedächtnislegierungsdrahts gelöst werden, der so angeordnet ist, dass er der Feder gegenüberliegt, um ein Lösen des Eingriffs der Arretierungsformation von der komplementären Formation zu bewirken.

In der US 4 728 181 A wird eine Stoßdämpfungsvorrichtung für einen Türspiegel von Automobilen beschrieben, die in der Lage ist, einen Stoß zu absorbieren, der auf den Türspiegel ausgeübt wird, wenn ein Fußgänger oder dergleichen den Türspiegel trifft, indem der Türspiegel automatisch gedreht wird. Die Stoßdämpfungsvorrichtung umfasst einen inneren Zylinder, der drehbar auf einer Stützachse montiert ist, und einen äußeren Zylinder, in den der innere Zylinder aufgenommen werden kann, und ein stoßdämpfendes Element, das zwischen dem inneren Zylinder und dem äußeren Zylinder angeordnet ist und jeweils an dem inneren und äußeren Zylinder befestigt ist. Der innere Zylinder weist in axialer Richtung eine längere Länge als der äußere Zylinder auf, die Stützachse ist zwischen oberen und unteren Flanschen angeordnet, die entweder an einer Tür oder einem Spiegelgehäuse angebracht sind, wobei die beiden Enden des inneren Zylinders durch die oberen und unteren Flansche befestigt sind und der äußere Zylinder mit dem anderen Bauteil ohne Flansch, entweder der Tür oder dem Spiegelgehäuse, verbunden ist.

Zur Vermeidung einer mit einer externen Kraft einhergehenden, übermäßigen Kraftanwendung auf einen Getriebemechanismus und dergleichen, beschreibt die JP H07 291032 einen Positionierungsmechanismus zwischen einem Basiselement und einem Spiegelgehäuse, der zum Halten des Spiegelgehäuses in mindestens einer Gebrauchsstellung vorgesehen ist, einen Kupplungsmechanismus zwischen einem Motor und dem Spiegelgehäuse, der zum Unterbrechen einer Kraftübertragung einer externen auf das Spiegelgehäuse wirkenden Kraft dient, wobei der Motor das Spiegelgehäuse zwischen einer Gebrauchsstellung und einer Nichtgebrauchsstellung dreht, einen Motorstoppmechanismus, der erkennt, sobald das Spiegelgehäuse eine Gebrauchsstellung oder eine Nichtgebrauchsstellung erreicht hat, und ein Mittel zum Umschalten der Drehrichtung des Motors in der Nähe des Kupplungsmechanismus. Die zum Lösen eines Eingriffs des Positionierungsmechanismus erforderliche Kraft ist kleiner eingestellt als die Kraft, die zum Lösen eines Eingriffs des Kupplungsmechanismus erforderlich ist, um zu vermeiden, dass der Kupplungsmechanismus gelöst wird, bevor sich das Spiegelgehäuse dreht.

Aus der EP 2 439 106 B1 ist ein Antriebsklappmechanismus für ein Rückblickelement, der an einem Kraftfahrzeug anzubringen ist, bekannt. Dieser Mechanismus umfasst ein Antriebsklappgehäuse, das zwischen einem Elementgehäuse und einem an einem Fahrzeug montierbaren Elementfuß montierbar ist. Ferner ist ein Kupplungsglied vorgesehen, das durch ein erstes Federmittel mit dem Elementfuß in Eingriff gebracht wird, wobei das Kupplungsglied aus einer Verriegelungsstellung bzw. Eingriffsstellung, in der Kupplungsarretierelemente eine relative Drehung zwischen dem Kupplungsglied und dem Elementfuß formschlüssig zurückhalten, und einer Entriegelungsstellung bzw. Nicht-Eingriffsstellung, in der ein Reibungseingriffsdrehmoment die relative Drehung zwischen dem Kupplungsglied und dem Elementfuß um eine Elementkopfachse nur etwas zurückhält, axial bewegbar ist, wobei das Kupplungsglied dem Elementgehäuse erlaubt, in Bezug auf den Elementfuß manuell bewegt zu werden. Zudem umfasst der Mechanismus einen elektrischen Antriebsstrang zur Erzeugung einer relativen Drehung zwischen dem Antriebsklappgehäuse und dem Kupplungsglied um die Elementkopfachse, wobei, wenn das Kupplungsglied in der Nicht-Eingriffsstellung ist und der elektrische Antriebstrang eine relative Drehung zwischen dem Antriebsklappgehäuse und dem Kupplungsglied erzeugt, sich das Antriebsklappgehäuse relativ zum Elementfuß dreht, bis eine Antriebsanschlagsfläche eines Antriebsanschlagsmittels eine Arretierung erreicht und ein Gegendrehmoment induziert, wobei das Gegendrehmoment größer ist als das Reibungseingriffsdrehmoment und so die Drehung des Antriebsklappgehäuses in Bezug auf den Elementfuß stoppt und stattdessen das Kupplungsglied dazu bringt, sich zu drehen, bis das Kupplungsglied eine eingerückte Stellung erreicht. Das Antriebsanschlagsmittel ist beweglich am Antriebsklappgehäuse montiert, und die Antriebsanschlagsfläche ist in Eingriff mit der an den Elementfuß montierten Arretierung, wobei die Antriebsanschlagsfläche axial zur Arretierung hin vorbelastet ist. Die Antriebsanschlagsfläche bewegt sich mit dem Antriebsklappgehäuse zwischen:
- einer Vorwärtsstellung, in der das Antriebsklappgehäuse und der Elementkopf in einer Vorwärtsklappstellung sind;
- einer Rückwärtsstellung, in der das Antriebsklappgehäuse und der Elementkopf in einer Rückwärtsklappstellung sind; und
- einer Antriebsstellung, in der das Antriebsklappgehäuse und der Elementkopf in einer ausgefahrenen Stellung sind, das Kupplungsglied in der Eingriffsstellung ist und die Antriebsanschlagsfläche zwischen der Arretierung und dem Antriebsklappgehäuse liegt, um einen formschlüssigen und wiederholbaren Anschlag zu liefern.

Die bekannte Rückblickelement-Klappvorrichtung nutzt einen einzigen Motor zum Wechsel zwischen der Eingriffsstellung und der Nicht-Eingriffsstellung, also zum Ver- und Entriegeln, sowie auch zum Anfahren der Vorwärtsstellung, Rückwärtsstellung und Antriebsstellung, also zum Verdrehen, was zu einem komplexen Aufbau führt.

Es ist die Aufgabe der Erfindung, die gattungsgemäße Rückblickelement-Klappvorrichtung für ein Kraftfahrzeug derart weiterzuentwickeln, dass sie einen einfachen Aufbau aufweist, ohne Reduktion der Sicherheit beim Verriegeln. Auch sollen große Geräuschentwicklungen beim Anfahren unterschiedlicher Stellungen des Rückblickelements vermieden werden. Zudem soll ein Anfahren jeder Wunsch-Stellung schnell möglich sein.

Diese Aufgabe wird erfindungsgemäß gelöst durch eine Rückblickelement-Klappvorrichtung für ein Kraftfahrzeug zum Anfahren zumindest einer Drehstellung eines Elementgehäuses relativ zu einem an das Kraftfahrzeug montierbaren Elementfuß und zum Ver- oder Entriegeln zumindest einer Ruhestellung des Elementgehäuses relativ zum Elementfuß, mit
- einem ersten Aktuator für eine Translationsbewegung eines ersten, mit dem Elementgehäuse fest verbundenen Angriffselements relativ zu einem zweiten, mit dem Elementfuß in Verbindung stehenden Angriffselement entlang einer Rotationsachse, wobei das erste Angriffselement und das zweite Angriffselement in einer Verriegelungsstellung, wie einer verriegelten Ruhestellung des Elementgehäuses, in einem festen Angriff aneinander stehen und in einer Entriegelungsstellung, wie einer entriegelten Ruhestellung des Elementgehäuses, der Angriff durch eine bestimmte Translationsbewegung gelöst ist,
- einem zweiten, separaten Aktuator für eine Drehbewegung zum Verdrehen des ersten Angriffselements relativ zum zweiten Angriffselement um die Rotationsachse, wobei durch eine erste Drehbewegung eine erste Drehstellung des Elementgehäuses aus der entriegelten Ruhestellung und durch eine zweite, der ersten Drehbewegung entgegengesetzte Drehbewegung des Elementgehäuses die entriegelte Ruhestellung aus der ersten Drehstellung anfahrbar sind, und
- einer Steuer- oder Regeleinrichtung für den ersten und/oder zweiten Aktuator, die mit zumindest einer Sensoreinrichtung zusammenwirkt, wobei
   - die Sensoreinrichtung einen ersten Sensor zum Sensieren eines Stellwegs des ersten Aktuators,
   - einen zweiten Sensor zum Sensieren eines Stellwegs des zweiten Aktuators,
   - einen dritten Sensor zur Hinderniserkennung im Bereich des Rückblickelements,
   - einen vierten Sensor zur Vibrationserfassung und/oder
   - einen fünften Sensor zur Fahrbahn- und/oder Fahrbewegungserfassung umfasst.

Dabei kann vorgesehen sein, dass zumindest ein Federelement in der Verriegelungsstellung eine Kraft an das erste und/oder zweite Angriffselement anlegt, und der erste Aktuator beim Wechsel von der Verriegelungsstellung in die Entriegelungsstellung gegen die Kraft des Federelements das erste oder zweite Angriffselement bewegt, insbesondere in einer Hubbewegung, wobei vorzugsweise der erste Aktuator die Entriegelungsstellung für eine bestimmte Zeitdauer hält.

Bevorzugt ist erfindungsgemäß, dass der erste Aktuator ein aktives Material nutzt, insbesondere als ein SMA-Antrieb, Piezoantrieb oder Antrieb mit einem elektroaktiven Polymer ausgeführt ist, wobei vorzugsweise der SMA-Antrieb zumindest ein SMA-Element, insbesondere in Form eines SMA-Drahts oder einer SMA-Feder, nutzt, woran zum Wechsel von der Verriegelungsstellung in die Entriegelungsstellung Strom, insbesondere in Form zumindest eines Stromstoßes und/oder über eine bestimmte Zeitdauer, vorzugsweise getaktet, anlegbar ist.

Dabei kann vorgesehen sein, dass das Federelement eine Spiralfeder umfasst, konzentrisch zu das oder der SMA-Elemente, insbesondere gleichmäßig verteilt, verlaufen, und/oder jedes SMA-Element beim Anlegen des Stroms sich durch Erwärmung verkürzt, so dass das Federelement von einem Verriegelungszustand in einen Entriegelungszustand gestaucht wird, während beim Abkühlen des SMA-Elements das Federelement von dem Entriegelungszustand, insbesondere automatisch, in den Verriegelungszustand zurückkehrt, und/oder der erste Aktuator in Abhängigkeit von einem ersten Stellwegsensor und/oder mittels, insbesondere mechanischer, Endschalter einstellbar ist.

Mit der Erfindung wird auch vorgeschlagen, dass der zweite Aktuator ein aktives Material, einen Magnetwinkelversteller oder einen Motor, insbesondere Elektromotor, der vorzugsweise über eine Getriebestufe an das erste Angriffselements angreift, nutzt, und/oder der zweite Aktuator in Abhängigkeit von einem zweiten Stellwegsensor und/oder mittels, insbesondere mechanischer, Endschalter einstellbar ist.

Erfindungsgemäße Ausführungsformen können dadurch gekennzeichnet sein, dass das erste Angriffselement zumindest einen Vorsprung zum Eingriff in eine, vorzugsweise komplementär zu dem Vorsprung ausgebildete, Ausnehmung in dem zweiten Angriffselement und/oder das zweite Angriffselement zumindest einen Vorsprung zum Eingriff in eine, vorzugsweise komplementär zu dem Vorsprung ausgebildete Ausnehmung in dem ersten Angriffselement umfasst, wobei vorzugsweise eine Vielzahl von Vorsprüngen vorgesehen ist, und/oder vorzugsweise jeder Vorsprung im Querschnitt eine Trapezform aufweist, und/oder vorzugsweise das erste Angriffselement einen ersten Ring und das zweite Angriffselement einen zweiten Ring umfasst, wobei die Ringe konzentrisch zu der Rotationsachse A_{Φ} angeordnet sind, und/oder das erste Angriffselement als ein erster Zahnkranz und/oder ein erstes Klemmelement, Bremselement und/oder Rastelement und das zweite Angriffselement als ein zweiter Zahnkranz und/oder ein zweites Klemmelement, Bremselement und/oder Rastelement ausgeformt ist.

Ferner wird erfindungsgemäß vorgeschlagen, dass der Elementfuß einen, insbesondere zylindrischen, Grundkörper aufweist oder mit demselben fest verbunden ist, das Federelement an den Grundkörper und das zweite Angriffselement angreift, und der erste Aktuator an den Grundkörper und das zweiten Angriffselement angreift, so dass eine Verriegelungseinrichtung in Zylinderform, insbesondere Hohlzylinderform, vorliegt.

Ebenfalls kann vorgesehen sein, dass die Steuer- oder Regeleinrichtung, der erste Aktuator und/oder der zweite Aktuator zumindest teilweise in der Verriegelungseinrichtung, insbesondere in dem Hohlzylinder, angeordnet sind.

Dabei wird wiederum vorgeschlagen, dass der erste Sensor zum Sensieren eines Stellwegs des ersten Aktuators in Form eines Widerstandssensors, Hall-Sensors, Temperatursensors oder Stromsensors in Kombination mit zumindest einem Anschlag ausgeformt ist, und/oder der zweite Sensor zum Sensieren eines Stellwegs des zweiten Aktuators in Form eines Drehwinkelsensors oder Stromsensors in Kombination mit zumindest einem Anschlag ausgeformt ist.

Das Rückblickelement kann zumindest ein Spiegelelement und/oder eine Kamera umfassen.

Bevorzugt ist gemäß der Erfindung, dass in der Verriegelungsstellung ein Formschluss zwischen dem ersten und zweiten Angriffselement vorliegt.

Die Erfindung liefert auch ein Verfahren zum Ansteuern der erfindungsgemäßen Rückblickelement-Klappvorrichtung, die dadurch gekennzeichnet ist, dass der Stellweg des ersten Aktuators in Form eines SMA-Aktuators über eine Temperatur- und/oder Widerstandsregelung und/oder unter Einsatz der Sensoreinrichtung eingestellt wird, und/oder der Stellweg des zweiten Aktuators über eine Temperatur- und/oder Widerstandsregelung und/oder unter Einsatz der Sensoreinrichtung eingestellt wird, und/oder die Steuer- und Regeleinrichtung eine Stromquelle zur Beaufschlagung des ersten und/oder zweiten Aktuators mit Stromimpulsen einstellt, vorzugsweise in Abhängigkeit von gespeicherten und/oder selbst angelernten Pulsfolgen.

Erfindungswesentlich ist die Nutzung zweier Aktuatoren, nämlich einen für eine Verriegelung bzw. Entriegelung und einen anderen für eine Drehung eines Elementgehäuses relativ zu einem Elementfuß in einem Rückblickelement eines Kraftfahrzeugs. Diese Hybridform führt nicht nur zu einem einfachen Aufbau, sondern auch zu einer Geräuschreduzierung sowie einer Steigerung der Verstellgeschwindigkeit bzw. Abklappgeschwindigkeit bei gleichzeitig unreduzierter Lebensdauer.

Besonders vorteilhaft ist nach der Erfindung, wenn zumindest der Aktuator, der eine Entriegelung durchführt, zumindest ein Formgedächtniselement (SMA-Element) nutzt und somit einen SMA-Aktuator darstellt. Ein SMA-Element, wie ein SMA-Draht oder eine SMA-Feder, kann nämlich über einen kurzen Stromstoß erhitzt werden, so dass es sich zusammenzieht und selbst gegen die Kraft eines Federelements beim Zusammenziehen wirken kann, um eine durch das Federelement gesicherte, vorzugsweise formschlüssige, Verriegelung aufzuheben. Sodann kann in einer Abkühlphase, in der das SMA-Element seine ursprüngliche Länge wiedergewinnt, auch das Federelement wieder in seine ursprüngliche Position zurückkehren, in der es eine Verriegelung sicherstellt, die im Fall eines Formschlusses auch relativ großen Kräften standhalten kann. Nur im entriegelten Zustand, in dem also das Federelement nicht eine Verriegelung erzwingt, kann über den zweiten Aktuator eine Drehung vorgenommen werden. Diese Drehung kann mittels eines beliebigen Antriebs ermöglicht werden, bspw. also wieder über einen SMA-Aktuator oder einen herkömmlichen Elektromotor.

Die Ansteuerung beider Aktuatoren kann in Abhängigkeit von Ausgabewerten von Sensoren stattfinden, und zwar zum einen zum genauen Einstellen der jeweiligen Bewegung, also der Translationsbewegung des ersten Aktuators und der Drehbewegung des zweiten Aktuators. Zum anderen ermöglichen die Sensoren auch, auf äußere Umstände wird z. B. ein Hindernis in der Nähe eines Rückblickelements zu reagieren. Wird z. B. ein Hindernis auf der Beifahrerseite erfasst, kann über die erfindungsgemäße Rückblickelement-Klappvorrichtung das Rückblickelement auf der Beifahrerseite schnell an das Kraftfahrzeug angeklappt werden, um eine Beschädigung zu vermeiden. Auf der Fahrerseite ist solch ein Anklappen auch möglich, jedoch gekoppelt mit einer Fahrgeschwindigkeit, bspw. bis zu einer Geschwindigkeit von 6 Kilometer pro Stunde, die üblicherweise mit einem Ein-/ und Ausparken verbunden wird. Aber es ist auch ein Verklappen mit einer erfindungsgemäßen Rückblickelement-Klappvorrichtung in Reaktion auf erfasste Vibrationen, sei es durch eine Fahrtbewegung an sich oder die Umgebung des Kraftfahrzeugs, bspw. im Falle eines Unwetters, möglich.

Weitere Merkmale und Vorteile der Erfindung ergeben sich aus der nachfolgenden Beschreibung, in der Ausführungsbeispiele der Erfindung anhand ein schematischer Zeichnungen beispielhaft erläutert werden. Dabei zeigt:
- Figur 1a, 1b und 1c: jeweils eine Schnittansicht durch eine erfindungsgemäße Rückblickelement-Klappvorrichtung, und zwar in einer Verriegelungsstellung, einer Entriegelungsstellung und beim Anfahren einer Drehstellung; und
- Figur 2: ein Flussdiagramm eines Anfahren einer Drehstellung mittels der Rückblickelement-Klappvorrichtung der Figuren 1a-1c.

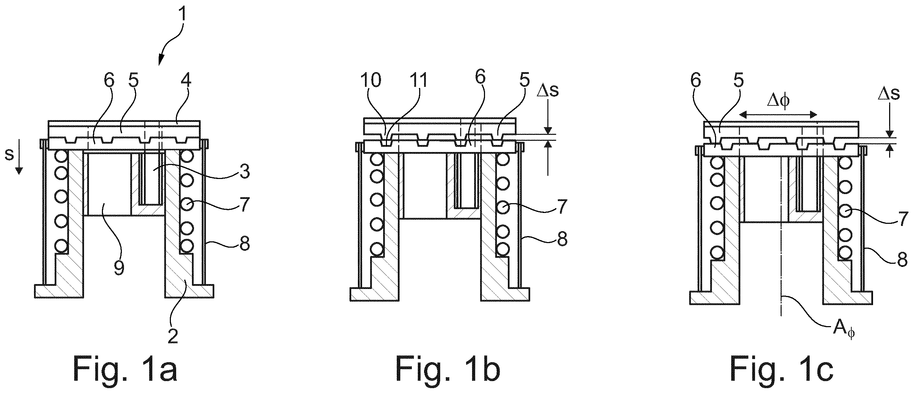

Die Figuren 1a bis 1c zeigen eine erfindungsgemäße Rückblickelement-Klappvorrichtung bspw. in Form einer Rückblickspiegel-Klappvorrichtung 1, die einen Grundkörper 2, der entweder von einem nicht-gezeigten Spiegelfuß bereitgestellt wird oder an demselben fest angebracht ist, nutzt, um weitere Bauteile zu tragen. So ist ein Antriebsmotor 3 als Teil eines Aktuators für eine Drehbewegung in dem Grundkörper 2, der eine Hohlzylinderform aufweist, angeordnet und dort auch befestigt, um über eine nicht-gezeigte Getriebestufe an ein Rotationselement 4 anzugreifen, das seinerseits mit einem nicht gezeigten Spiegelgehäuse bzw. Spiegelkopf verbunden ist, wobei in dem Spiegelkopf ein Spiegelelement bereitgestellt ist. Das Rotationselement 4 ist mit einem Angriffselement 5 fest verbunden oder mit demselben ausgeformt. Dieses Angriffselement 5 greift gemäß Figur la fest an ein weiteres Angriffselement 6 an, wenn eine Verriegelungsstellung eingenommen wird. Zwischen dem Angriffselement 6 und dem Grundkörper 2 ist ein Federelement 7, konzentrisch zu dem Grundkörper 2, angeordnet. Konzentrisch um das Federelement 7 verläuft eine Vielzahl von SMA-Drähten 8 oder ein SMA-Draht mit mehreren Windungen als Teil eines weiteren Aktuators. Jeder SMA-Draht 8 greift dabei einerseits an das Angriffselement 6 und andererseits an den Grundkörper 2 an, ebenso wie das Federelement 7.

In der in Figur la dargestellten Verriegelungsstellung, die eine verriegelte Ruhestellung darstellt, drückt das Federelement 7 das Angriffselement 6 an das Angriffselement 5 zum Verriegeln an. Dabei greifen trapezförmige Vorsprünge 10 des Angriffselements 5 in komplementäre Ausnehmungen 11 des Angriffselements 6. Die Angriffselemente 5, 6 können als Zahnkränze ausgeformt sein. Die Angriffselemente 5, 6 können aber auch als Klemm-, Brems- oder Rastelemente ausgebildet sein, also auch bspw. als reibschlüssige Bremse fungieren.

Wird ein mechanisches Drehmoment an das Rotationselement 4 angelegt, kann aufgrund der Trapezform der Vorsprünge 10 und somit auch der Ausnehmungen 11 der Eingriff zwischen den beiden Angriffselementen 5, 6 gelöst werden, und zwar unter Stauchung des Federelements 7.

Dies ist für den sogenannten Kinderkopftest wesentlich, der prüft, ob beim Zusammenstoß eines Rückblickspiegels mit einem Kinderkopf der Rückblickspiegel wegklappt.

Wird ein Stromimpuls an die SMA-Drähte 8 angelegt, so heizen sich diese auf und ziehen sich dadurch zusammen, so dass das Federelement 7 gestaucht wird, wie Figur 1b zu entnehmen ist. Dabei wird entlang der Translationsrichtung S ein Spalt ΔS zwischen den beiden Angriffselementen 5 und 6 geöffnet und somit der Angriff der Vorsprünge 10 an die Ausnehmungen 11 aufgehoben, so dass eine Entriegelung vorliegt, wie in Figur 1b gezeigt. Mit anderen Worten führt die Kontraktion der SMA-Drähte 8 zu einer Stellkraft, die größer als die Andruckkraft des Federelements 7 ist. Dies führt zu einer Entkopplung der Angriffselemente 5 und 6, so dass das Rotationselement 4 samt Angriffselement 5 nur noch radial um eine Führungskontur des Grundkörpers 2 gelagert ist, während eine lineare Verschiebung, also Translation, des Rotationselements 4 samt Angriffselements 5 nicht weiter möglich ist.

In dem in Figur 1b gezeigten entriegelten Ruhezustand ist es möglich, durch Einschalten des Antriebsmotors 3 eine Drehung des Angriffselements 5 relativ zu dem Angriffselement 6 zu bewirken, nämlich um die Rotationsachse A_{Φ} um einen bestimmten Drehwinkel ΔΦ, wie in Figur 1c angedeutet. Der Antriebsmotor 3 erzeugt somit nach Aktivierung ein geringes Drehmoment, welches über die Getriebestufe an das Angriffselement 5 samt Rotationselement 4 geleitet wird, so dass sich eine Rotation dieser beiden Teile ergibt.

Für die Kontrolle des Stellwegs des Antriebsmotors 3 kann ein Drehwinkelsensor, wie ein Potentiometer, ein Hall-Sensor oder aber ein Induktionssensor, eingesetzt werden. Alternativ ist es auch möglich, sämtliche Positionen mittels mechanischer Endschalter abzufragen.

Zum Entriegeln ist es vorteilhaft, sämtliche SMA-Drähte 8 gleichzeitig mit Strom zu beaufschlagen, vorzugsweise jeweils mit einem kurzen Stromstoß, so dass auch tatsächlich ein gleichmäßiges Entriegeln stattfindet. Sobald kein Strom mehr an die SMA-Drähte 8 angelegt wird, kühlen dieselben wieder ab, so dass es automatisch zu einem erneuten Verriegeln kommt, da sich die SMA-Drähte 8 jeweils in ihre ursprüngliche Länge expandieren. Um die Zeitdauer der Entriegelung zu vergrößern, können mehrere kurze Stromstöße an die SMA-Drähte 8 angelegt werden.

Der Stellweg, der beim Zusammenziehen der SMA-Drähte 8 zur Öffnung des Spalts ΔS wirkt, kann über einen Hall-Sensor, eine Stromsteuerung, eine Widerstandsmessung oder dergleichen gesteuert stattfinden.

Anstelle von SMA-Drähten können auch SMA-Zugfedern, beispielsweise 5 gleichmäßig um den Umfang des Federelements 7 verteilt, eingesetzt werden. Die Dimensionierung der Kraft des SMA-Aktuators kann über die Anzahl an SMA-Drähten 8 erfolgen. Je höher die benötigte Stellkraft ist, desto mehr SMA-Drähte werden benötigt. Eine Überwachung des Stellwegs der SMA-Drähte kann über eine Widerstandsregelung erfolgen. Dabei kann über einen Messverstärker die Änderung des elektrischen Widerstands überwacht werden. Diese Änderungen sind signifikant mit steigendem ΔS. Bei kritischen Widerstandswerten oder einer Identifikation eines bestimmten Gradienten der Widerstandsänderungen über die Zeit kann ein Soll-Haltepunkt automatisch ermittelt werden. Die Erfassung eines Soll-Haltepunkts kann alternativ über ein mechanischen Endschalter erfolgen. Ein Zweipunkteregler kann das Signal eines Haltepunkts aufnehmen und in dem logischen Zustand der Stromquelle für die SMA-Drähte zwischen einem Parameter "beheizen" und "kühlen" durch An- und Ausschalten der Stromzufuhr ändern.

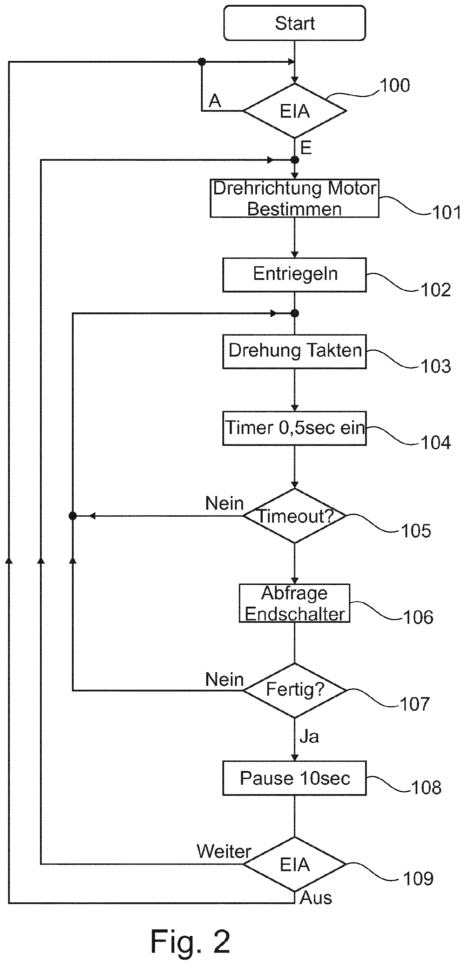

In Figur 2 ist nochmals der Ablauf eines Abklappvorgangs eines Rückblickelements mit einer erfindungsgemäßen Rückblickelement-Klappvorrichtung 1 dargestellt. In einem ersten Schritt 100 wird die Vorrichtung 1 eingeschaltet und sodann in einem zweiten Schritt 101 die für ein Anklappen notwendige Drehrichtung des Antriebsmotors 3 bestimmt. In einem dritten Schritt 102 wird über den SMA-Aktuator, nämlich durch Anlegen eines Strompulses an jeden der SMA-Drähte 8, ein Entriegeln bewirkt, wie in Figur 1b dargestellt. Danach wird über den Antriebsmotor 3 vorzugsweise getaktet eine Drehung von der ausgefahrenen Ruheposition in die Anklappstellung gedreht, und zwar über eine Vielzahl von Takten jeweils mit einer Dauer von 0,5 sec, wie durch die Schrittabfolge 103, 104 und 105 angedeutet. In gleicher Taktung werden weitere Stromimpulse an die SMA-Drähte 8 angelegt, um diese warm und somit verkürzt zu halten, so dass ein Entriegeln gewährleistet ist. Wird in einem nächsten Schritt 106 von einem Sensor in Form z.B. eines Endschalters signalisiert, dass die gewünschte Endposition erreicht ist, wird die Drehung beendet, wie durch die Schritte 107 und 108 angedeutet, so dass schließlich im Schritt 109 die Vorrichtung 1 ausgeschaltet werden kann.

Kommt es aufgrund einer Beendigung einer Strombeaufschlagung der SMA-Drähte 8 zu einem Abkühlen derselben, ziehen sich eben diese SMA-Drähte 8 zusammen, wobei sie ein Hineinrutschen der Vorsprünge 10 in die Ausnehmungen 11 erzwingen, so dass wieder die Verriegelungsstellung gemäß Figur 1a eingenommen wird.

Die SMA-Drähte 8 können durch geeignete Anlage von Stromimpulsen auf einer ersten Temperatur "warm" gehalten werden, um einen bestimmten Drehvorgang abschließen zu können. Auf einer zweiten Temperatur können die SMA-Drähte gehalten werden, um zwar noch eine Verriegelung sicherzustellen, aber ein schnelles Entriegeln zu ermöglichen. Mit anderen Worten lässt sich über die Einstellung der Temperatur der SMA-Drähte 8 eine Steuerung des Hybridsystems der erfindungsgemäßen Rückblickelement-Klappvorrichtung 1 bewirken.

## Patentansprüche

1. Rückblickelement-Klappvorrichtung (1) für ein Kraftfahrzeug zum Anfahren zumindest einer Drehstellung eines Elementgehäuses relativ zu einem an das Kraftfahrzeug montierbaren Elementfuß und zum Ver- oder Entriegeln zumindest einer Ruhestellung des Elementgehäuses relativ zum Elementfuß, mit
• einem ersten Aktuator (8) für eine Translationsbewegung eines ersten, mit dem Elementgehäuse fest verbundenen Angriffselements (5) relativ zu einem zweiten, mit dem Elementfuß in Verbindung stehenden Angriffselement (6) entlang einer Rotationsachse A_{Φ}, wobei das erste Angriffselement (5) und das zweite Angriffselement (6) in einer Verriegelungsstellung, wie einer verriegelten Ruhestellung des Elementgehäuses, in einem festen Angriff aneinander stehen und in einer Entriegelungsstellung, wie einer entriegelten Ruhestellung des Elementgehäuses, der Angriff durch eine bestimmte Translationsbewegung gelöst ist,
• einem zweiten, separaten Aktuator (3) für eine Drehbewegung zum Verdrehen des ersten Angriffselements (5) relativ zum zweiten Angriffselement (6) um die Rotationsachse A_{Φ}, wobei durch eine erste Drehbewegung eine erste Drehstellung des Elementgehäuses aus der entriegelten Ruhestellung und durch eine zweite, der ersten Drehbewegung entgegengesetzte Drehbewegung des Elementgehäuses die entriegelte Ruhestellung aus der ersten Drehstellung anfahrbar sind, und
• einer Steuer- oder Regeleinrichtung für den ersten und/oder zweiten Aktuator (8, 3),
**gekennzeichnet durch**
zumindest eine Sensoreinrichtung, mit der die Steuer- oder Regeleinrichtung zusammenwirkt und die
• einen ersten Sensor zum Sensieren eines Stellwegs des ersten Aktuators (8),
• einen zweiten Sensor zum Sensieren eines Stellwegs des zweiten Aktuators (3),
• einen dritten Sensor zur Hinderniserkennung im Bereich des Rückblickelements,
• einen vierten Sensor zur Vibrationserfassung und/oder
• einen fünften Sensor zur Fahrbahn- und/oder Fahrbewegungserfassung umfasst.

2. Rückblickelement-Klappvorrichtung nach Anspruch 1,
**dadurch gekennzeichnet, dass**
zumindest ein Federelement (7) in der Verriegelungsstellung eine Kraft an das erste und/oder zweite Angriffselement (5, 6) anlegt, und
der erste Aktuator (8) beim Wechsel von der Verriegelungsstellung in die Entriegelungsstellung gegen die Kraft des Federelements (7) das erste oder zweite Angriffselement (5, 6) bewegt, insbesondere in einer Hubbewegung, wobei vorzugsweise der erste Aktuator (8) die Entriegelungsstellung für eine bestimmte Zeitdauer hält.

3. Rückblickelement-Klappvorrichtung nach Anspruch 1 oder 2,
**dadurch gekennzeichnet, dass**
der erste Aktuator (8) ein aktives Material nutzt, insbesondere als ein SMA-Antrieb, Piezoantrieb oder Antrieb mit einem elektroaktiven Polymer ausgeführt ist, wobei vorzugsweise der SMA-Antrieb zumindest ein SMA-Element (8), insbesondere in Form eines SMA-Drahts oder einer SMA-Feder, nutzt, woran zum Wechsel von der Verriegelungsstellung in die Entriegelungsstellung Strom, insbesondere in Form zumindest eines Stromstoßes und/oder über eine bestimmte Zeitdauer, vorzugsweise getaktet, anlegbar ist.

4. Rückblickelement-Klappvorrichtung nach Anspruch 3,
**dadurch gekennzeichnet, dass**
das Federelement (7) eine Spiralfeder umfasst, konzentrisch zu der das oder die SMA-Elemente (8), insbesondere gleichmäßig verteilt, verlaufen, und/oder jedes SMA-Element (8) beim Anlegen des Stroms sich durch Erwärmung verkürzt, so dass das Federelement (7) von einem Verriegelungszustand in einen Entriegelungszustand gestaucht wird, während beim Abkühlen des SMA-Elements (8) das Federelement (7) von dem Entriegelungszustand, insbesondere automatisch, in den Verriegelungszustand zurückkehrt, und/oder
der erste Aktuator (8) in Abhängigkeit von einem ersten Stellwegsensor und/oder mittels, insbesondere mechanischer, Endschalter einstellbar ist.

5. Rückblickelement-Klappvorrichtung nach einem der vorhergehenden Ansprüche,
**dadurch gekennzeichnet, dass**
der zweite Aktuator (3) ein aktives Material, einen Magnetwinkelversteller oder einen Motor (3), insbesondere Elektromotor, der vorzugsweise über eine Getriebestufe an das erste Angriffselements (5) angreift, nutzt, und/oder
der zweite Aktuator (3) in Abhängigkeit von einem zweiten Stellwegsensor und/oder mittels, insbesondere mechanischer, Endschalter einstellbar ist.

6. Rückblickelement-Klappvorrichtung nach einem der vorangehenden Ansprüche,
**dadurch gekennzeichnet, dass**
das erste Angriffselement (5) zumindest einen Vorsprung (10) zum Eingriff in eine, vorzugsweise komplementär zu dem Vorsprung (10) ausgebildete, Ausnehmung (11) in dem zweiten Angriffselement (6) und/oder das zweite Angriffselement (6) zumindest einen Vorsprung zum Eingriff in eine, vorzugsweise komplementär zu dem Vorsprung ausgebildete, Ausnehmung in dem ersten Angriffselement (5) umfasst, wobei vorzugsweise eine Vielzahl von Vorsprüngen (10) vorgesehen ist, und/oder vorzugsweise jeder Vorsprung (10) im Querschnitt eine Trapezform aufweist, und/oder vorzugsweise das erste Angriffselement (5) einen ersten Ring und das zweite Angriffselement (6) einen zweiten Ring umfasst, wobei die Ringe konzentrisch zu der Rotationsachse A_{Φ} angeordnet sind, und/oder
das erste Angriffselement (5) als ein erster Zahnkranz und/oder ein erstes Klemmelement, Bremselement und/oder Rastelement und das zweite Angriffselement (6) als ein zweiter Zahnkranz und/oder
ein zweites Klemmelement, Bremselement und/oder Rastelement ausgeformt ist.

7. Rückblickelement-Klappvorrichtung nach einem der vorangehenden Ansprüche,
**dadurch gekennzeichnet, dass**
der Elementfuß einen, insbesondere zylindrischen, Grundkörper (2) aufweist oder mit demselben fest verbunden ist,
das Federelement (7) an den Grundkörper (2) und das zweite Angriffselement (6) angreift, und
der erste Aktuator (8) an den Grundkörper (2) und das zweiten Angriffselement (6) angreift, so dass eine Verriegelungseinrichtung in Zylinderform, insbesondere Hohlzylinderform, vorliegt.

8. Rückblickelement-Klappvorrichtung nach einem der vorangehenden Ansprüche,
**dadurch gekennzeichnet, dass**
die Steuer- oder Regeleinrichtung, der erste Aktuator und/oder der zweite Aktuator (8, 3) zumindest teilweise in der Verriegelungseinrichtung, insbesondere in dem Hohlzylinder, angeordnet sind.

9. Rückblickelement-Klappvorrichtung nach einem der vorangehenden Ansprüche,
**dadurch gekennzeichnet, dass**
der erste Sensor zum Sensieren eines Stellwegs des ersten Aktuators (8) in Form eines Widerstandssensors, Hall-Sensors, Temperatursensors oder Stromsensors in Kombination mit zumindest einem Anschlag ausgeformt ist, und/oder
der zweite Sensor zum Sensieren eines Stellwegs des zweiten Aktuators (3) in Form eines Drehwinkelsensors oder Stromsensors in Kombination mit zumindest einem Anschlag ausgeformt ist.

10. Rückblickelement-Klappvorrichtung nach einem der vorangehenden Ansprüche,
**dadurch gekennzeichnet, dass**
das Rückblickelement zumindest ein Spiegelelement und/oder eine Kamera umfasst.

11. Rückblickelement-Klappvorrichtung nach einem der vorangehenden Ansprüche,
**dadurch gekennzeichnet, dass**
in der Verriegelungsstellung ein Formschluss zwischen dem ersten und zweiten Angriffselement (5, 6) vorliegt.

## Claims

1. A rear-view element folding device (1) for a motor vehicle for approaching at least one rotational position of an element housing relative to an element foot that can be mounted on the motor vehicle, and for locking or unlocking at least one resting position of the element housing relative to the element foot, having
• a first actuator (8) for a translation movement of a first engagement element (5) that is firmly connected to the element housing relative to a second engagement element (6) that is connected to the element foot along a rotation axis A_{Φ}, wherein the first engagement element (5) and the second engagement element (6) in a locking position, such as a locked resting position of the element housing, stand in a fixed engagement with each other and in an unlocking position, such as an unlocked resting position of the element housing, the engagement is released by a certain translation movement,
• a second, separate actuator (3) for a rotational movement for rotating the first engagement element (5) relative to the second engagement element (6) around the rotation axis A_{Φ}, wherein through a first rotational movement, a first rotation position of the element housing can be approached from the unlocked resting position, and through a second rotational movement of the element housing, which is opposite to the first rotational movement, the unlocked resting position can be approached from the first rotational position, and
• a control or regulating device for the first and/or second actuator (8, 3),
**characterized by**
at least one sensor device, with which the control or regulating device interacts,
and which comprises
• a first sensor for sensing a travel path of the first actuator (8),
• a second sensor for sensing a travel path of the second actuator (3),
• a third sensor for detecting obstacles in the area of the rear-view element,
• a fourth sensor for capturing vibrations, and/or
• a fifth sensor for capturing the road and/or driving motion.

2. The rear-view element folding device according to claim 1,
**characterized in that**
at least one spring element (7) in the locking position applies a force onto the first and/or second engagement element (5, 6), and
the first actuator (8) moves the first or second engagement element (5, 6) against the force of the spring element (7) during the change from the locking position into the unlocking position, in particular in a lifting movement, wherein the first actuator (8) preferably holds the unlocking position for a certain period of time.

3. The rear-view element folding device according to claim 1 or 2,
**characterized in that**
the first actuator (8) uses an active material, in particular as an SMA drive, piezo drive or a drive designed with an electroactive polymer, wherein the SMA drive preferably uses at least one SMA element (8), in particular in the form of an SMA wire or an SMA spring, on which a current can be applied for the change from the locking position into the unlocking position, in particular in the form of at least one current surge and/or over a certain period of time, preferably in a clocked manner.

4. The rear-view element folding device according to claim 3,
**characterized in that**
the spring element (7) comprises a spiral spring, concentrically to which the SMA element(s) (8) run, in particular in an evenly distributed manner, and/or
each SMA element (8) is shortened through heating when the current is applied, so that the spring element (7) is compressed from a locking state into an unlocking state, while during the cooling of the SMA element (8), the spring element (7) returns from the unlocking state, in particular automatically, into the locking state, and/or
the first actuator (8) can be adjusted depending on a first travel sensor and/or by means of end switches, in particular mechanical end switches.

5. The rear-view element folding device according to any one of the preceding claims,
**characterized in that**
the second actuator (3) uses an active material, a magnetic angle adjuster or a motor (3), in particular an electric motor, which preferably engages via a gear stage onto the first engagement element (5), and/or
the second actuator (3) can be adjusted depending on a second travel sensor and/or by means of end switches, in particular mechanical end switches.

6. The rear-view element folding device according to any one of the preceding claims,
**characterized in that**
the first engagement element (5) comprises at least one protrusion (10) for engagement into a recess (11) in the second engagement element (6), the recess being preferably designed to be complementary to the protrusion (10) and/or the second engagement element (6) comprises at least one protrusion for engagement into a recess in the first engagement element (5), is the recess being preferably designed to be complementary to the protrusion, wherein a plurality of protrusions (10) is preferably provided, and/or
each protrusion (10) preferably comprises a trapezoid form in cross-section, and/or the first engagement element (5) preferably comprises a first ring and the second engagement element (6) comprises a second ring, wherein the rings are arranged concentrically to the rotation axis A_{Φ}, and/or
the first engagement element (5) is formed as a first gear ring and/or
a first clamping element, brake element and/or latching element, and the second engagement element (6) is formed as a second gear ring and/or
a second clamping element, brake element and/or latching element.

7. The rear-view element folding device according to any one of the preceding claims,
**characterized in that**
the element foot comprises a basic body (2), in particular having a cylindrical form, or is firmly connected thereto,
the spring element (7) engages on the basic body (2) and the second engagement element (6), and
the first actuator (8) engages on the basic body (2) and the second engagement element (6), so that a locking device is provided in a cylindrical form, in particular a hollow cylindrical form.

8. The rear-view element folding device according to any one of the preceding claims,
**characterized in that**
the control or regulating device, the first actuator and/or the second actuator (8, 3) are arranged at least partially in the locking device, in particular in the hollow cylinder.

9. The rear-view element folding device according to any one of the preceding claims,
**characterized in that**
the first sensor for sensing a travel path of the first actuator (8) is in the form of a resistance sensor, Hall effect sensor, temperature sensor or current sensor in combination with at least one stop, and/or
the second sensor for sensing a travel path of the second actuator (3) is in the form of a rotation angle sensor or current sensor in combination with at least one stop.

10. The rear-view element folding device according to any one of the preceding claims,
**characterized in that**
the rear-view element comprises at least one mirror element and/or a camera.

11. The rear-view element folding device according to any one of the preceding claims,
**characterized in that**
in the locking position, a form fit is provided between the first and second engagement element (5,6).

## Revendications

1. Dispositif repliable pour élément rétroviseur (1) pour un véhicule pour le positionnement dans au moins une position de pivotement d'un boîtier d'élément relativement à un pied d'élément montable sur le véhicule et pour le verrouillage ou le déverrouillage d'au moins une position de repos du boîtier d'élément relativement au pied d'élément, avec
• un premier actionneur (8) pour un mouvement de translation d'un premier élément d'engagement (5) lié de façon fixe au boîtier d'élément relativement à un deuxième élément d'engagement (6) en liaison avec le pied d'élément le long d'un axe de rotation A_{Φ}, le premier élément d'engagement (5) et le deuxième élément d'engagement (6) se trouvant engagés de façon fixe l'un par rapport à l'autre dans une position de verrouillage, ainsi que dans une position de repos verrouillée du boîtier d'élément, et l'engagement étant défait par un mouvement de translation défini dans une position de déverrouillage, ainsi que dans une position de repos déverrouillée,
• un deuxième actionneur (3) séparé pour un mouvement de rotation pour le pivotement du premier élément d'engagement (5) relativement au deuxième élément d'engagement (6) sur l'axe de rotation A_{Φ}, une première position de rotation du boîtier d'élément pouvant être atteinte par un premier mouvement de rotation à partir de la position de repos déverrouillée , et par un deuxième mouvement de rotation du boîtier d'élément opposé au premier mouvement de rotation, la position de repos déverrouillée pouvant être atteinte à partir de la première position de rotation, et
• une installation de commande ou de réglage pour le premier et/ou le deuxième actionneurs (8, 3),
**caractérisé par**
au moins une installation de capteur, avec laquelle l'installation de commande ou
de réglage interagit et laquelle comprend
• un premier capteur pour la détection d'une course de réglage du premier actionneur (8),
• un deuxième capteur pour la détection d'une course de réglage du deuxième actionneur (3),
• un troisième capteur pour la détection d'obstacles dans la zone de l'élément rétroviseur,
• un quatrième capteur pour la détection de vibrations et/ou
• un cinquième capteur pour la détection de voie et/ou de déplacement.

2. Dispositif repliable pour élément rétroviseur selon la revendication 1,
**caractérisé en ce que**
au moins un élément à ressort (7) exerce une force sur le premier et/ou le deuxième éléments d'engagement (5, 6) dans la position de verrouillage, et
le premier actionneur (8) déplace le premier ou le deuxième éléments d'engagement (5, 6) contre la force de l'élément à ressort (7), en particulier par un mouvement de levage, lors du passage de la position de verrouillage à la position de déverrouillage,
le premier actionneur (8) maintenant de préférence la position de déverrouillage pendant une durée déterminée.

3. Dispositif repliable pour élément rétroviseur selon la revendication 1 ou 2,
**caractérisé en ce que**
le premier actionneur (8) utilise un matériau actif, en particulier est réalisé comme un entraînement AMF, un entraînement piézo ou un entraînement avec polymère électroactif, l'entraînement AMF utilisant de préférence un élément AMF (8), en particulier sous la forme d'un fil AMF ou d'un ressort AMF, de l'électricité étant applicable pour le passage de la position de verrouillage à la position de déverrouillage, en particulier sous la forme d'au moins un choc électrique et/ou sur une durée déterminée, de préférence de façon cadencée.

4. Dispositif repliable pour élément rétroviseur selon la revendication 3,
**caractérisé en ce que**
l'élément à ressort (7) comprend un ressort hélicoïdal, par rapport auquel les éléments AMF (8) s'étendent de façon concentrique, en particulier répartis de façon régulière, et/ou chaque élément AMF (8) se rétrécit par échauffement lors de l'application d'électricité, de telle sorte que l'élément à ressort (7) est refoulé d'un état de verrouillage à un état de déverrouillage, l'élément à ressort (7) repassant, en particulier automatiquement, de l'état de déverrouillage à l'état de verrouillage pendant le refroidissement de l'élément AMF (8), et/ou le premier actionneur (8) est réglable en fonction d'un premier capteur de course de réglage et/ou au moyen d'interrupteurs de fin de course, en particulier mécaniques.

5. Dispositif repliable pour élément rétroviseur selon l'une quelconque des revendications précédentes,
**caractérisé en ce que**
le deuxième actionneur (3) utilise un matériau actif, un ajusteur d'angle magnétique ou un moteur (3), en particulier un moteur électrique, qui s'engage de préférence par un rapport de transmission sur le premier élément d'engagement (5), et/ou
le deuxième actionneur (3) est réglable en fonction d'un deuxième capteur de course de réglage et/ou au moyen d'interrupteurs de fin de course, en particulier mécaniques.

6. Dispositif repliable pour élément rétroviseur selon l'une quelconque des revendications précédentes,
**caractérisé en ce que**
le premier élément d'engagement (5) comprend au moins une saillie (10) pour l'engagement dans un évidement (11) formé de préférence de façon complémentaire à la saillie (10) dans le deuxième élément d'engagement (6) et/ou le deuxième élément d'engagement (6) comprend au moins une saillie pour l'engagement dans un évidement formé de préférence de façon complémentaire à la saillie dans le premier élément d'engagement (5), une multiplicité de saillies (10) étant prévues de préférence, et/ou
chaque saillie (10) présentant de préférence une section de forme trapézoïdale, et/ou, de préférence, le premier élément d'engagement comprenant un premier anneau et le deuxième élément d'engagement (6) comprenant un deuxième anneau, les anneaux étant disposés de façon concentrique par rapport à l'axe de rotation A_{Φ}, et/ou
le premier élément d'engagement (5) étant formé comme une couronne dentée et/ou un premier élément de serrage, élément de freinage et/ou élément d'encliquetage et
le deuxième élément d'engagement (6) étant formé comme une deuxième couronne dentée et/ou un deuxième élément de serrage, élément de freinage et/ou élément d'encliquetage.

7. Dispositif repliable pour élément rétroviseur selon l'une quelconque des revendications précédentes,
**caractérisé en ce que**
le pied d'élément présente un corps de base (2), en particulier cylindrique, ou est lié de façon fixe à celui-ci,
l'élément à ressort (7) s'engage sur le corps de base (2) et sur le deuxième élément d'engagement (6),
et
le premier actionneur (8) s'engage sur le corps de base (2) et sur le deuxième élément d'engagement (6),
de telle sorte qu'une installation de verrouillage se présente sous une forme cylindrique, en particulier sous une forme de cylindre creux.

8. Dispositif repliable pour élément rétroviseur selon l'une quelconque des revendications précédentes, **caractérisé en ce que**
l'installation de commande ou de réglage, le premier actionneur et/ou le deuxième actionneur (8, 3) sont disposés au moins partiellement dans l'installation de verrouillage, en particulier dans le cylindre creux.

9. Dispositif repliable pour élément rétroviseur selon l'une quelconque des revendications précédentes,
**caractérisé en ce que**
le premier capteur pour la détection d'une course de réglage du premier actionneur (8) est formé sous la forme d'un capteur de résistance, capteur à effet Hall, capteur de température ou capteur de courant en combinaison avec au moins une butée, et/ou le deuxième capteur pour la détection d'une course de réglage du deuxième actionneur (3) est formé sous la forme d'un capteur d'angle de rotation ou capteur de courant en combinaison avec au moins une butée.

10. Dispositif repliable pour élément rétroviseur selon l'une quelconque des revendications précédentes,
**caractérisé en ce que**
l'élément rétroviseur comprend au moins un élément miroir et/ou une caméra.

11. Dispositif repliable pour élément rétroviseur selon l'une quelconque des revendications précédentes,
**caractérisé en ce qu'**
une liaison par complémentarité de forme existe entre le premier et le deuxième éléments d'engagement (5, 6) dans la position de verrouillage.
